# EUROPEAN PATENT SPECIFICATION

(11) **EP 0 326 505 B1**
(45) Date of publication and mention of the grant of the patent: **15.12.1993**
(21) Application number: 89630014.2
(22) Date of filing: 23.01.1989
(51) Int. Cl.: B23Q 9/00, B25H 1/04

(54) **Foldable stand for threading machines**
Zusammenlegbare Unterstützung für Gewindeschneidmaschinen
Appui pliable pour une filière

(30) Priority: 29.01.1988 US 150394
(43) Date of publication of application: 02.08.1989
(60) Divisional application: 92203609.0
(73) Proprietor: EMERSON ELECTRIC CO., St. Louis Missouri 63136 (US)
(72) Inventor: Gress, Paul William, Bay Village Ohio 44140 (US); Jansen, John Herman, Bay Village Ohio 44140 (US)
(74) Representative: Weydert, Robert

(56) References cited:
- EP-A- 0 218 520
- CH-A- 359 981
- CH-A- 475 876
- DE-A- 2 045 928
- GB-A- 2 025 279
- GB-A- 2 051 690
- US-A- 4 190 260
- US-A- 4 249 749
- US-A- 4 632 627

## Description

### Background of the Invention

This invention relates to the art of stands for metalworking machine and, more particularly, to foldable a stand for a power driven threading machine.

The use of portable power driven pipe and rod threading machines to facilitate the on site preparation of threaded pipe and rod is of course well known, and it is likewise well known to provide a stand to support such a machine during metalworking operations. Certain such stands heretofore provided have included four ground or floor engaging legs while others have included a pair of such legs and a pair of wheels which facilitate lifting one end of the stand for the stand and the machine mounted thereon to be supported by the wheels for movement from one location to another along an underlying support surface such as a floor or ground.

While stands of the foregoing character adequately serve to support the threading machine during operation thereof and provide a degree of portability with respect to the machine, a number of problems are encountered in connection with both the portability and transportability of the machine and stand. In this respect, the loading or unloading of the stand and machine thereon relative to the bed of a truck, a loading dock or the like, may require the use of a forklift truck, an elongated ramp if the stand is wheeled, and/or the physical efforts of at least two workmen, especially in connection with physically lifting or lowering the stand and machine relative to a truck bed or dock. In connection with wheeling the stand and machine up or down a ramp, or physically lifting or lowering the stand and machine, it will be appreciated that the vast majority of the weight of the stand and machine is that of the machine alone, which may for example be 68 to 90 kg (150 to 200 pounds), and that the center of gravity of the stand and machine is therefore relatively high with respect to the underlying support surface, therefore, extreme care must be taken to avoid tipping of the stand and machine during such movement thereof, adding to the physical exertion on the part of the workmen in connection with such loading or unloading operations. Furthermore, if it is necessary to move the stand and machine up or down a stairway to or from a location of use, storage or like, the tipping and physical exertion problems are multiplied. Further in connection with moving the stand and machine up or down a stairway, the wheels or wheeled stands heretofore provided interfere with such movement and add to the difficulty and physical exertion required in connection therewith by engaging against the stair riser in moving up the stairs and by having to drop along the riser between adjacent steps in going down the stairs. Accordingly, it will be appreciated that the transportation of such stands with threading machines mounted thereon is time consuming, physically tiring, and can be extremely hazardous for the workmen and potentially damaging to the machine should tipping occur.

It has been proposed to provide a foldable stand for threading machines comprised of a scissors-like leg assembly having ground engaging wheel and handle components and which is spring loaded to be moved from the folded to the extended position with the metalworking machine mounted thereon. When folded, the wheels and handle facilitate elevating one end of the stand and machine relative to ground for the stand and machine to be supported by the wheels for movement from one location to another. However, the spring force required to facilitate displacement of the stand and machine to the extended position and to maintain the latter position is such that the folding and extending operations are hazardous to a workman and can lead to injury. Furthermore, while the collapsing does lower the center of gravity of the machine so as to reduce the problem of tipping in connection with transportation of the stand and machine, the loading or unloading of the stand and machine relative to a truck bed or movement of the stand and machine up or down a stairway remains time consuming and physically demanding on the part of the workmen performing these tasks. The latter is due at least in part to the interference of the wheels of the stand with such movement thereof as described above.

A folding stand as defined in the precharacterizing portion of independent claim 1, having rotatable screw means to move a scissors-like leg assembly between a folded and an extended position is disclosed in GB-A-2 051 690. The folding stand of GB-A-2 051 690 is adapted for transporting an article, for example, from a vehicle into a building and for elevating the article to facilitate unloading, and avoids some of the disadvantages referred to above but movement of the stand up or down a stairway is still time consuming and hazardous. Reference is also made to CH-A-475 876 which discloses a transport cart having skid means.

### Summary of the Invention

The object of the invention is to provide a folding stand of the recited type which facilitates the movement of the stand and machine up or down a stairway in a manner which minimizes physical effort in the part of a workman or workmen, the time required to achieve such movement of the stand and machine, and the exposure of such workman or workmen to hazardous conditions.

According to the invention, to achieve this, there is provided a folding stand for supporting and transporting a power driven threading machine relative to an underlying surface comprising a first support means for said machine, a second support means having first and second leg means interconnected with said first support means for displacement between extended and retracted positions relative thereto in which said first support means is respectively elevated and lowered relative to said underlying surface, means including rotatable screw means on said first support means for displacing said first and second leg means between said extended and retracted positions, one of said first and second leg means including wheel means, said wheel means and said other leg means engaging said underlying surface to support said first support means relative to said underlying surface when said first and second leg means are in said extended position, said stand in said retracted position of said first and second leg means being pivotal about the axis of said wheel means to position said first support means in an inclined position in which said stand is supported by said wheel means for rolling movement along said underlying surface, characterized in that said other leg means has handle means and said one leg means has planar skid means extending therealong, said wheel means and handle means being spaced above the plane of said planar skid means when said first and second leg means are in said retracted position, and said planar skid means being inclined in said inclined position of said first support means to facilitate sliding displacement of said stand upwardly and downwardly relative to a horizontal edge elevated above said underlying surface.

The handle of the folding stand according to the invention can be grasped to elevate the folded stand and machine to an inclined disposition in which the wheels engage the underlying surface to facilitate movement of the stand and machine therealong, and the skids extend in the direction between the wheels and handle and facilitate sliding displacement of the stand and machine relative to the edge of a truck bed or loading platform, or along stairs, so as to facilitate loading, unloading and/or other sliding displacements of the stand and machine which may be desired or necessary. By having the wheels and skids relatively dimensioned and/or positioned for the outer surfaces of the wheels to be slightly spaced from the plane of the skids such sliding movements of the stand and machine are achieved without interference between the wheels and the edge or edges along which the skids are moved.

Advantageous embodiments of the folding stand are recited in the dependent claims.

### Brief Description of the Drawings

The foregoing features, and others, will in part be obvious and in part pointed out more fully hereinafter in conjunction with the written description of a preferred embodiment of the invention illustrated in the accompanying drawings in which:
FIGURE 1 is an exploded perspective view of the upper and lower support portions of a foldable stand in accordance with the present invention;
FIGURE 2 is a side elevation view of the stand in its unfolded position and showing a power driven threading machine mounted on the upper support portion; and
FIGURE 3 is a side elevation view of the stand and threading machine in the folded position of the stand.

### Description of a Preferred Embodiment

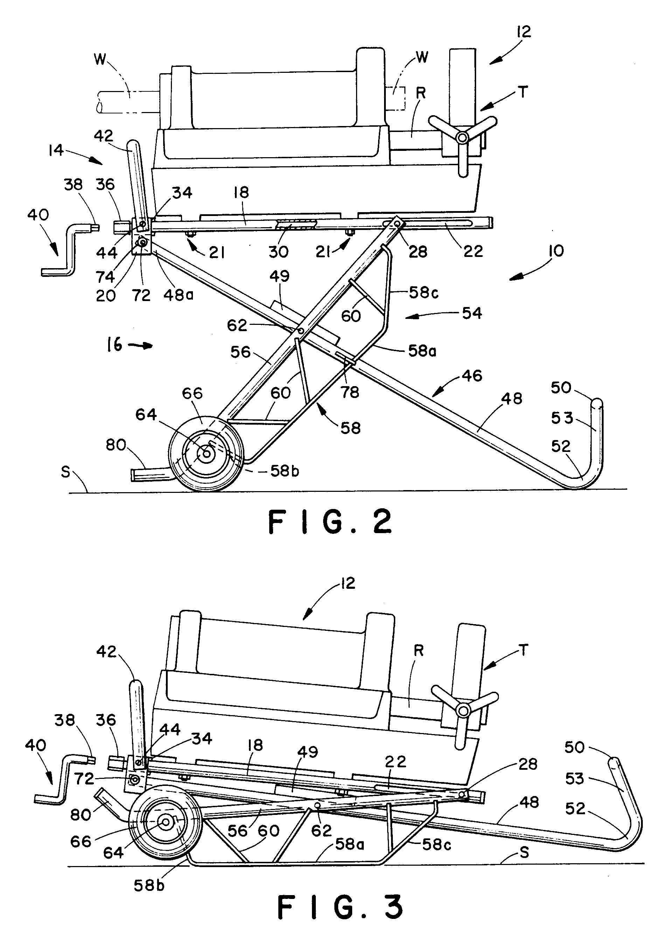

With reference now in greater detail to the drawings wherein the showings are for the purpose of illustrating a preferred embodiment of the invention only and are not for the purpose of limiting the invention, there is illustrated a foldable cart 10 for a power driven threading machine 12. Stand 10 is comprised of a first or upper support portion 14 and a second or lower support portion 16, which support portions are structured and interconnected as more fully described hereinafter for the stand to be unfolded to facilitate supporting machine 12 in a use position relative to an underlying surface S, as shown in FIGURE 2, and for the stand to be folded to the position shown in FIGURE 3 in which the stand facilitates the transportation and storage of the machine. The structure and operation of threading machine 12 is not important to the present invention and, as is well known in the threading machine art, the threading machine is adapted to receive a workpiece W and to rotate the workpiece relative to tooling T which is axially displaceable along rails R relative to the adjacent end of workpiece W so as to enable the performing of work thereon, such as cutting, reaming and/or threading of the workpiece end. As is further well known in connection with such threading machines, workpiece W extends through a machine spindle which is driven by a suitable motor and transmission mechanism within the machine housing. In connection with the embodiment of the stand disclosed herein, the threading machine has a length of about 84 cm (33 inches), a height of about 48 cm (19 inches), a width of about 40 cm (16 inches), and weighs between 72 and 95 kg (160 and 210 pounds).

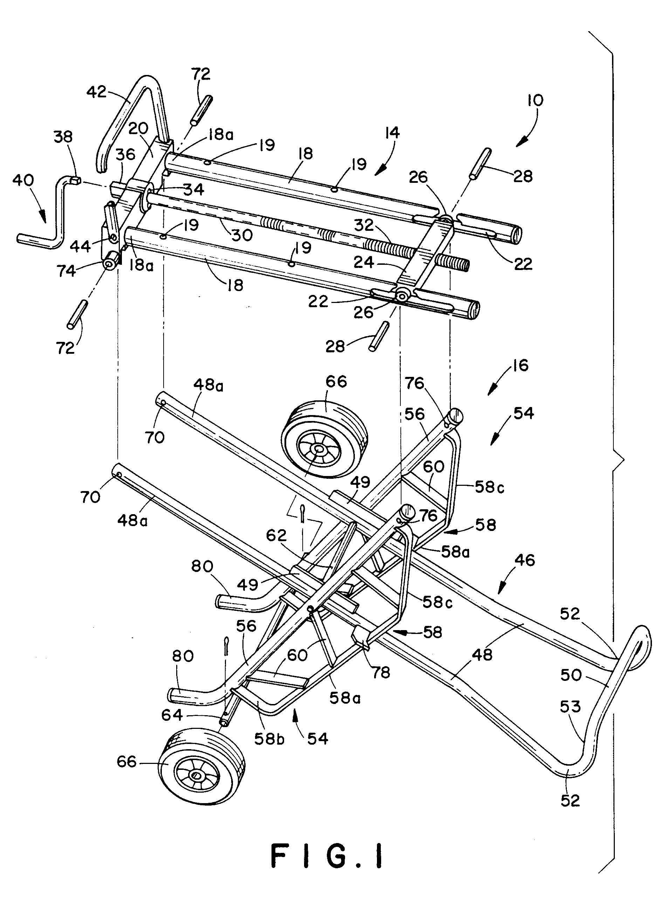

Upper support portion 14 is comprised of a pair of longitudinally extending, parallel, tubular metal side rail members 18 having ends 18a laterally spaced apart and interconnected by a cross member 20 which, for the latter purpose, may be provided with openings axially receiving the side rail ends. The opposite end of each of the side rails 18 is provided with a longitudinally extending slot 22 extending horizontally through the inner and outer side portions thereof. As will be appreciated from the broken away portions of the side rails in FIGURE 1, a yoke member 24 extends laterally between the side rails and is provided at its opposite ends with rollers 26 each of which is disposed inside the corresponding tubular side rail for rolling movement therealong. Rollers 26 are mounted on yoke 24 by means of pins 28 which extend through the corresponding slot 22 and into the yoke member 24 and have outer ends interconnected with lower support portion 16 as explained more fully hereinafter.

Rollers 26 support yoke member 24 for longitudinal displacement relative to side rails 18 between the opposite ends of slots 22, and such longitudinal displacement is achieved by means of a jackscrew arrangement including a shaft 30 having a threaded portion 32 extending through a cooperatively threaded opening in yoke member 24. The opposite end of shaft 30 extends through an opening therefor in cross member 20 and which opening supports the shaft for rotation about its axis. Shaft 30 is restrained against axial displacement relative to cross member 20 by means of a pin 34 extending through the shaft on the inner side of cross member 20 and an enlargement 36 on the outer end of the shaft which engages the outer side of cross member 20. Enlargement 36 is provided with a non-circular opening, not shown, which is adapted to receive the correspondingly contoured end 38 of a crank member 40 by which shaft 30 is adapted to be rotated in opposite directions about its axis. It will be appreciated from the foregoing description that rotation of the shaft in opposite directions about its axis results in longitudinal displacement of yoke member 24 toward and away from cross member 20. Such longitudinal displacement of yoke member 24 operates to fold and unfold cart 10 as will become apparent hereinafter.

Upper support portion 14 further includes an inverted U-shaped tubular metal handle member 42 mounted on cross member 20 for the purpose set forth hereinafter. Handle 42 can be mounted on the cross member in any suitable manner and, in the embodiment illustrated, is secured to the opposite ends of the cross member by means threaded fasteners 44 extending laterally into the cross member as will be appreciated from the showing of one such fastener in FIGURE 1. Further, it will be appreciated that the openings in cross member 20 for ends 18a of the side rails can be vertically aligned with the lower ends of the legs of handle 42, whereby fasteners 44 can extend sufficiently into the cross member to extend through openings therefore in rail ends 18a to secure the rails against separation from cross member 20. As will be appreciated from FIGURES 1 and 2, side rails 18 of upper support portion 14 are provided with openings 19 therethrough which facilitate the mounting of threading machine 12 thereon such as by means of threaded fastener assemblies 21 extending through mounting feet 23 on the machine housing.

Lower support portion 16 includes one piece U-shaped tubular metal leg and handle component 46. More particularly, leg and handle component 46 is comprised of laterally spaced apart parallel legs 48 and a handle therebetween defined by a portion 50 and transition portions 52 and 53 between each leg 48 and the corresponding end of portion 50. Portion 50 is transverse to and offset from legs 48, and transition portions 52 are arcuate and engage the underlying support surface S when the stand is unfolded to support machine 12 in its use position as shown in FIGURE 2. Transition portions 53 are straight and provide hand grip areas for the purpose set forth hereinafter.

Lower support portion 16 further includes a pair of leg units 54 each laterally outwardly adjacent one of the legs 48 of leg and handle component 46. Each leg unit is comprised of a tubular metal leg member 56 and a skid rail which, in the embodiment shown, is provided by a metal skid strip 58 having an elongate planar intermediate portion 58a spaced from leg 56 and opposite ends 58b and 58c extending toward and secured to leg 56 such as by welding. Intermediate portion 58a is braced relative to leg 56 by bracing strips 60 spaced apart between the opposite ends of the skid strip and welded to the latter and to leg 56. Leg units 54 are pivotally interconnected with leg and handle component 46 by means of a pivot rod 62 extending through openings therefor in legs 48 and 56 and having its opposite ends suitably secured against axial displacement from the leg members such as by cotter pins not shown. Preferably, legs 48 are reinforced in the areas thereof provided with the openings for pivot rod 62 by means of longitudinally extending plates 49 welded to the legs. The lower ends of legs 56 with respect to the positions thereof shown in FIGURES 1 and 2 are laterally interconnected by an axle rod 64 suitably secured thereto such as by welding, and the outer ends of rod 64 receive wheels 66 which engage underlying support surface S when the stand is in its unfolded position as shown in FIGURE 2 of the drawing.

As will be appreciated from FIGURES 1 and 2 of the drawing, the underside of cross member 20 of upper support portion 14 is provided adjacent its opposite ends with slots which receive the upper ends 48a of legs 48 of the handle and leg component 46. Ends 48a are provided with openings 70 therethrough and are pivotally interconnected with cross member 20 by means of corresponding pins 72 which extend through support sleeves 74 in the opposite ends of cross member 20 and thence through openings 70 and into corresponding openings in the cross member laterally inwardly of slots 68. The upper ends of leg members 56 of leg units 54 are provided with openings 76 therethrough and are positioned laterally outwardly adjacent the corresponding one of the rollers 26 on upper support portion 14 so as to be pivotally interconnected with yoke member 24 and thus upper support portion 14 by means of the pins 28 which extend through openings 76 and rollers 26 into corresponding openings therefor in yoke member 24.

For the purpose set forth hereinafter, each of the leg members 48 of leg and handle unit 46 is provided with a positioning tab 78 which is welded or otherwise secured to the leg to extend outwardly across the corresponding skid strip 58 and thence downwardly along the outer edge thereof. Likewise for the purpose set forth hereinafter, the lower ends of leg members 56 of leg units 54 extend beyond wheel axle 64 and are bent relative to the axis of the corresponding leg 56 to provide extended portions 80 which project outwardly beyond the outer surface of wheels 66.

It is believed that the following description of the operation of stand 10 with respect to the folding and unfolding thereof, and the functions of the stand in each of the folded and unfolded positions, will be readily understood from the foregoing description of the structural components of the stand and the structural interrelationships therebetween. In this respect, and presuming the component parts to be in the positions shown in FIGURE 2 of the drawing in which the stand is in its erected or unfolded position, the introduction of end 38 of crank 40 into the opening therefor in enlarged end 36 of shaft 30 and the manual rotation of the shaft in one direction about its axis operates to move yoke member 24 to the right in FIGURES 1 and 2 of the drawing, whereby rollers 26 displace pins 28 and thus the upper ends of legs 56 to the right along slots 22. It will be appreciated that such displacement of pins 28 results in relative pivotal displacement between leg units 56 and leg and handle component 46 clockwise and counterclockwise, respectively, relative to pivot rod 62. Such relative pivotal displacement is facilitated by wheels 56 being in rolling engagement with the underlying support surface S, and continued rotation of crank 40 in the direction to produce such displacement utimately results in stand 10 reaching the folded position illustrated in FIGURE 3 of the drawing. Preferably, intermediate portions 58a of skid strips 58 on leg units 54 are spaced from leg members 56 of the latter such that when the skid strip portions engage surface S in the folded position wheels 66 are sightly spaced above surface S. This relative positioning is for the purpose set forth hereinafter.

When the stand is in its retracted or folded position shown in FIGURE 3, it will be appreciated that a workman can grasp handle portion 50 of the leg and handle component 46 and pull upwardly to pivot and stand and threading machine upwardly relative to the axis of wheel axle 64 to an inclined position. In this inclined position, the stand and threading machine are supported by wheels 66 and the workman can then grasp handle portions 53 and/or 50 and wheel the stand and machine from one location to another along surface S. Furthermore, with the folded stand in the inclined position, it will be appreciated that intermediate skid strip portions 58a advantageously provide for sliding the stand and threading machine upwardly or downwardly along a stairway, or upwardly or downwardly relative to an elevated edge such as that which would be defined by the end edge of a truck bed or the edge of a loading or unloading platform. It will be further appreciated that such displacement along a stairway and sliding displacement along the truck bed or loading platform surface can be achieved without wheels 66 interfering with sliding of the stand in that the wheels are spaced above the plane of skid strip portions 58a as described above. Such sliding of the folded stand and threading machine on the skid strips can be accomplished by pulling the stand through the use of handle portions 50 and 53 of leg and handle component 46. Further, handle 42 on cross member 20 at the opposite end of the stand can also be used in connection with such sliding displacement of the stand. Moreover, handle 42 and handle portions 50 and 53 facilitate two workmen picking up the stand and machine and carrying the latter. Accordingly, loading or unloading of the stand and threading machine relative to a truck bed or elevated platform is facilitated as is the transporting of the stand and threading machine along an underlying support surface and into any location of use which requires elevating or lowering of the stand and threading machine in an inclined disposition.

When the stand and threading machine are in the position shown in FIGURE 3, rotation of crank 40 in the direction opposite that by which folding is achieved results in displacement of yoke member 26 toward cross member 20 and, thus, displacement of rollers 26 and pins 28 in the corresponding direction. Upon such displacement, leg units 56 and leg and handle component 46 pivot relative to one another about pivot rods 62 to move the stand and machine from the position shown in FIGURE 3 toward the position shown in FIGURE 2. Advantageously in connection with the jackscrew arrangement for achieving such displacement of yoke member 24 and the leg units and leg and handle component, threading machine 12 can be elevated to any desired position above underlying support surface S up to the position shown in FIGURE 2 so as to provide a working position most suitable for a given workman. In connection with such adjustable positioning of the threading machine, positioning tabs 78 on legs 48 of leg and handle component 46 are adapted to engage the corresponding skid strip portion 58a during such unfolding and elevating of the threading machine to limit unfolding movement and thus define the uppermost position of the stand. In the latter position of the stand, tabs 78 not only determine such position but also interengage with the skid strips so as to add stability to the stand in the fully extended position thereof.

As will be appreciated from FIGURE 2, when stand 10 is in the unfolded position, projections 80 extend from wheels 66 in the rearward direction with respect to the working end of threading machine 12 and are closely spaced and generally parallel to underlying surface S. Accordingly, should a workman introduce a workpiece W into the threading machine which would extend to the left from the machine as seen in FIGURE 2 to such an extent that the weight of the workpiece would tend to tilt the stand and threading machine counterclockwise relative to the axis of wheel axle 64, projections 80 will engage the underlying surface S to restrain such tilting displacement and thus avoid the potential damage to the machine and/or injury to a workman which could occur if such tilting were not so restrained. Projections 80 also serve the useful purpose of cooperating with wheels 66 to support the folded stand with machine 12 thereon in an inclined disposition relative to a horizontal underlying surface S. In this respect, when the stand is folded and then pivoted to an inclined disposition as described hereinabove to facilitate rolling movement of the stand and machine relative to surface S, the stand can be further tilted or inclined for projections 80 to engage surface S together with wheels 66. In such disposition of the stand and machine, the assembly is inclined sufficiently for the center gravity thereof to be in a location between wheel axle 64 and the outermost ends of projections 80, whereby the stand and machine can be stored in the inclined position. This facilitates the conservation of storage space as well as facilitating the manipulation of the stand from the storage position to the inclined position for rolling movement along the underlying support surface.

## Claims

1. Folding stand for supporting and transporting a power driven threading machine (12) relative to an underlying surface (S) comprising a first support means (14) for said machine (12), a second support means (16) having first and second leg means (46, 54) interconnected with said first support means (14) for displacement between extended and retracted positions relative thereto in which said first support means (14) is respectively elevated and lowered relative to said underlying surface (S), means including rotatable screw means (30, 32) on said first support means (14) for displacing said first and second leg means (46, 54) between said extended and retracted positions, one (54) of said first and second leg means (46, 54) including wheel means (66), said wheel means (66) and said other leg means (46) engaging said underlying surface (S) to support said first support means (14) relative to said underlying surface (S) when said first and second leg means (46, 54) are in said extended position, said stand (10) in said retracted position of said first and second leg means (46, 54) being pivotal about the axis of said wheel means (66) to position said first support means (14) in an inclined position in which said stand (10) is supported by said wheel means (66) for rolling movement along said underlying surface (S), characterized in that said other leg means (46) has handle means (50) and said one leg means (54) has planar skid means (58) extending therealong, said wheel means (66) and handle means (50) being spaced above the plane of said planar skid means (58) when said first and second leg means (46, 54) are in said retracted position, and said planar skid means (58) being inclined in said inclined position of said first support means (14) to facilitate sliding displacement of said stand (10) upwardly and downwardly relative to a horizontal edge elevated above said underlying surface (S).

2. Stand according to claim 1, characterized in that said first support means (14) has opposite ends and said first and second leg means (46, 54) have corresponding first and second ends, means (62) pivotally interconnecting said first and second leg means (46, 54) between said first and second ends thereof, means (72) pivotally interconnecting said first end of said first leg means (46) with said first support means (14) adjacent one of said opposite ends, and means including yoke means (24) interconnecting said first end of said second leg means (54) with said first support means (14) adjacent the other of said opposite ends for displacement toward and away from said one end, said rotatable screw means (30, 32) interengaging with said yoke means (24) for displacing said first end of said second leg means (54) toward and away from said one end to respectively displace said first and second leg means (46, 54) toward said extended and retracted positions thereof.

3. Stand according to claim 2, characterized in that said first and second leg means (46, 54) include means (78, 58) interengaging to limit displacement thereof in the direction toward said extended position.

4. Stand according to claim 2, characterized in that said second end of said second leg means (54) includes said wheel means (66) and said second end of the first leg means (46) includes said handle means (50).

## Patentansprüche

1. Klappgestell zum Tragen und Transportieren einer mit Motorantrieb versehenen Gewindeschneidemaschine (12) relativ zu einer darunter gelegenen Oberfläche (S), mit einer ersten Trageinrichtung (14) für die Maschine (12), einer zweiten Trageinrichtung (16), die eine erste und eine zweite Beineinrichtung (46, 54) hat, welche mit der ersten Trageinrichtung (14) verbunden ist, zur Verlagerung zwischen einer ausgefahrenen und eingefahrenen Position relativ zu derselben, in welchen die erste Trageinrichtung (14) relativ zu der darunter gelegenen Oberfläche (S) angehoben bzw. abgesenkt ist, einer Einrichtung, die eine drehbare Spindeleinrichtung (30, 32) an der ersten Trageinrichtung (14) zum Verlagern der ersten und zweiten Beineinrichtung (46, 54) zwischen der ausgefahrenen und zurückgezogenen Position aufweist, wobei von der ersten und zweiten Beineinrichtung (46, 54) eine (54) eine Radeinrichtung (66) aufweist, wobei die Radeinrichtung (66) und die andere Beineinrichtung (46) die darunter gelegene Oberfläche (S) berühren, um die erste Trageinrichtung (14) relativ zu der darunter gelegenen Oberfläche (S) abzustützen, wenn die erste und zweite Beineinrichtung (46, 54) in der ausgefahrenen Position sind, wobei das Gestell (10) in der eingefahrenen Position der ersten und zweiten Beineinrichtung (46, 54) um die Achse der Radeinrichtung (66) schwenkbar ist, um die erste Trageinrichtung (14) in einer geneigten Position zu Positionieren, in welcher das Gestell (10) durch die Radeinrichtung (66) zur Rollbewegung längs der darunter gelegenen Oberfläche (S) abgestützt ist, dadurch gekennzeichnet, daß die andere Beineinrichtung (46) eine Griffeinrichtung (50) hat und daß die eine Beineinrichtung (54) eine ebene Kufeneinrichtung (58) hat, die sich längs derselben erstreckt, wobei die Radeinrichtung (66) und die Griffeinrichtung (50) mit Abstand über der Ebene der ebenen Kufeneinrichtung (58) angeordnet sind, wenn die erste und zweite Beineinrichtung (46, 54) in der eingefahrenen Position sind, und wobei die ebene Kufeneinrichtung (58) in der geneigten Position der ersten Trageinrichtung (14) geneigt ist, um eine Verschiebeverlagerung des Gestells (10) aufwärts und abwärts relativ zu einem horizontalen Rand zu erleichtern, der sich erhöht über der darunter gelegenen Oberfläche (S) befindet.

2. Gestell nach Anspruch 1, dadurch gekennzeichnet, daß die erste Trageinrichtung (14) entgegengesetzte Enden hat und daß die erste und zweite Beineinrichtung (46, 54) entsprechend ein erstes und zweites Ende haben, eine Einrichtung (62), die die erste und zweite Beineinrichtung (46, 54) zwischen dem ersten und zweiten Ende derselben schwenkbar verbindet, eine Einrichtung (72), welche das erste Ende der ersten Beineinrichtung (46) mit der ersten Trageinrichtung (14) an einem der entgegengesetzten Enden schwenkbar verbindet, und eine Einrichtung mit einer Jocheinrichtung (24), die das erste Ende der zweiten Beineinrichtung (54) mit der ersten Trageinrichtung (14) an dem anderen der entgegengesetzten Enden zur Verlagerung zu dem einen Ende hin und von demselben weg verbindet, wobei die drehbare Spindeleinrichtung (30, 32) mit der Jocheinrichtung (24) in Eingriff ist, um das erste Ende der zweiten Beineinrichtung (54) zu dem einen Ende hin und von demselben weg zu verlagern, um die erste und zweite Beineinrichtung (46, 54) in Richtung der ausgefahrenen bzw. eingefahrenen Position derselben zu verlagern.

3. Gestell nach Anspruch 2, dadurch gekennzeichnet, daß die erste und zweite Beineinrichtung (46, 54) eine Einrichtung (78, 58) aufweisen, die miteinander in Eingriff gelangen, um die Verlagerung derselben in Richtung zu der ausgefahrenen Position zu begrenzen.

4. Gestell nach Anspruch 2, dadurch gekennzeichnet, daß das zweite Ende der zweiten Beineinrichtung (54) die Radeinrichtung (66) aufweist und daß das zweite Ende der ersten Beineinrichtung (46) die Griffeinrichtung (50) aufweist.

## Revendications

1. Chariot repliable pour supporter et transporter une machine à fileter motorisée (12) par rapport à une surface sous-jacente (S), comprenant un premier moyen de support (14) pour la machine (12), un second moyen de support (16) comportant des premier et second moyens à jambes (46,54) interconnectés avec le premier moyen de support (14), pour pouvoir se déplacer entre eux entre des positions relativement étendue et rétractée, dans lesquelles le premier moyen de support (14) est respectivement élevé et abaissé par rapport à la surface sous-jacente (S), des moyens, sur le premier moyen de support (14), comportant des moyens à vis rotative (30,32) pour déplacer les premier et second moyens à jambes (46,54) entre les positions étendue et rétractée, l'un (54) des premier et second moyens à jambes (46,54) comportant des roues (66), ces roues (66) et l'autre moyen à jambes (46) venant en contact avec la surface sous-jacente (S) afin de supporter le premier moyen de support (14) par rapport à cette surface sous-jacente (S) lorsque les premier et second moyens à jambes (46,54) se trouvent dans la position étendue, le chariot (10), dans la position rétractée des premier et second moyens à jambes (46,54), pouvant pivoter autour de l'axe des roues (66) de la manière à placer le premier moyen de support (14) dans une position inclinée dans laquelle le chariot est supporté par les roues (66) de manière à pouvoir rouler le long de la surface sous-jacente (S), caractérisé en ce que l'autre moyen à jambes (46) comporte une poignée (50) et le premier moyen à jambes (54) comporte un patin plan (58) s'étendant le long de lui, les roues (66) et la poignée (50) étant espacées au-dessus du plan de ce patin plan (58) lorsque les premier et second moyens à jambes (46,54) se trouvent dans la position rétractée, le patin plan (58) étant incliné, dans la position inclinée du premier moyen de support (14), afin de faciliter le mouvement de glissement du chariot (10) vers le haut et vers le bas par rapport à un bord horizontal surélevé au-dessus de la surface sous-jacente (S).

2. Chariot suivant la revendication 1 caractérisé en ce que le premier moyen de support (14) a des extrémités opposées et les premier et second moyens à jambes (46,54) ont des premières et secondes extrémités correspondantes, un moyen (62) interconnecte à pivotement les premier et second moyens à jambes (46,54) entre leurs premières et secondes extrémités, un moyen (72) interconnecte à pivotement la première extrémité du premier moyen à jambes (46) avec le premier moyen de support (14), à proximité de l'une de ses extrémités opposées, et des moyens comportant un joug (24) interconnecte la première extrémité du second moyen à jambes (54) avec le premier moyen de support (14), au voisinage de l'autre de ses extrémités opposées, pour pouvoir se déplacer en direction de sa première extrémité et en sens inverse, les moyens à vis rotative (30,32) étant en prise avec le joug (24) de manière à déplacer la première extrémité du second moyen à jambe (54) en direction de la première extrémité du moyeu de support et en sens inverse, afin de déplacer respectivement les premier et second moyens à jambes (46,54) en direction des positions étendue et rétractée de ces moyens.

3. Chariot suivant la revendication 2 caractérisé en ce que les premier et second moyens à jambes (46,54) comportent des moyens (78,58) coopérant entre eux pour limiter leur déplacement en direction de la position étendue.

4. Chariot suivant la revendication 2 caractérisé en ce que la seconde extrémité du second moyen à jambes (54) comporte les roues (66) et la seconde extrémité du premier moyen à jambes (46) comporte la poignée (50).
